(19) **Europäisches Patentamt**

**European Patent Office**

**Office européen des brevets**

(11) Veröffentlichungsnummer: **0 483 529 B1**

(12) **EUROPÄISCHE PATENTSCHRIFT**

(45) Veröffentlichungstag der Patentschrift: **01.02.95**

(51) Int. Cl.6: **C08L 27/06**, //(C08L27/06, 51:00)

(21) Anmeldenummer: **91116655.1**

(22) Anmeldetag: **30.09.91**

(54) **Schlagzähe Polyvinylchloridharzmassen.**

(30) Priorität: **08.10.90 DE 4031802**

(43) Veröffentlichungstag der Anmeldung:
**06.05.92 Patentblatt 92/19**

(45) Bekanntmachung des Hinweises auf die
Patenterteilung:
**01.02.95 Patentblatt 95/05**

(84) Benannte Vertragsstaaten:
**BE DE ES FR GB IT NL SE**

(56) Entgegenhaltungen:
**DE-A- 2 414 561**
**DE-A- 2 557 828**
**FR-A- 2 261 313**

(73) Patentinhaber: **BASF Aktiengesellschaft**
**Carl-Bosch-Strasse 38**
**D-67063 Ludwigshafen (DE)**

(72) Erfinder: **Hungenberg, Klaus-Dieter, Dr.**
**Ortsstrasse 135**
**W-6943 Birkenau (DE)**
Erfinder: **Lynch, John, Dr.**
**Bachusstrasse 15**
**W-6529 Monsheim (DE)**

EP 0 483 529 B1

**Beschreibung**

Die Erfindung betrifft schlagzähe Polyvinylchloridharzmassen, enthaltend

(A) 50 bis 99 Gew.-% eines Homopolymeren des Vinylchlorids oder eines Copolymeren des vinylchlorids mit mindestens 80 Gew.-% Vinylchlorid-einheiten und

(B) 1 bis 50 Gew.-% eines Pfropfcopolymerisats aus

1 bis 25 Gew.-% einer Pfropfgrundlage aus

20 bis 79,99 Gew.-% eines vinylaromatischen Monomeren

20 bis 79,99 Gew.-% eines $C_1$-$C_{10}$-Alkylmethacrylats

0,01 bis 10 Gew.-% ein bi- oder polyfunktionellen Vernetzers

0 bis 10 Gew.-% eines $C_1$-$C_{12}$-Alkylacrylats

0 bis 20 Gew.-% weiterer Comonomere,

19 bis 10 Gew.-% einer 1. Pfropfhülle aus

50 bis 99,99 Gew.-% eines vinylaromatischen Monomeren

0,01 bis 10 Gew.-% eines bi- oder polyfunktionellen Vernetzers

0 bis 19 Gew.-% eines $C_1$-$C_{10}$-Alkylmethacrylats

0 bis 40 Gew.-% eines weiteren Comonomeren

und

19 bis 80 Gew.-% einer 2. Pfropfhülle aus

50 bis 99,99 Gew.-% eines $C_1$-$C_{12}$-Alkylacrylats

0,01 bis 10 Gew.-% eines bi- oder polyfunktionellen Vernetzers

0 bis 20 Gew.-% eines vinylaromatischen Monomeren

0 bis 30 Gew.-% eines $C_1$-$C_{10}$-Alkylmethacrylats

0 bis 40 Gew.-% weiterer Comonomere

mit der Maßgabe, daß man Art und Menge der Monomeren der Pfropfgrundlage so wählt, daß der Brechungsindex der Pfropfgrundlage maximal ± 0,02 vom Brechungsindex des gesamten Pfropfcopolymerisats und der Komponente (A) abweicht.

Die Schlagzähigkeit von Polyvinylchlorid kann bekannterweise durch Zusatz von Pfropfcopolymerisaten deutlich erhöht werden. Damit die Transparenz des schlagzäh modifizierten Polyvinylchlorids nicht beeinträchtigt wird, verwendet man als Schlagzähmodifier solche Polymerisate, die praktisch den gleichen Brechungsindex haben wie das Polyvinylchlorid. Derartige Polyvinylhalogenidharzmassen sind aus der US-A-37 63 279 bekannt. Das dort beschriebene Pfropfcopolymerisat hat einen zweistufigen Aufbau mit einer Pfropfgrundlage aus vorwiegend Styrol und einer Pfropfhülle aus vorwiegend Alkylacrylaten. Trotz gleichen Brechungsindex des Pfropfcopolymerisats und des Polyvinylchlorids sind die optischen Eigenschaften der aus den Polyvinylhalogenidharzmassen hergestellten Formkörper nicht ganz befriedigend. Insbesondere ist noch ein Blauschimmer zu beobachten.

Der Erfindung lagen daher schlagzähe Polyvinylharzmassen mit hoher Transparenz als Aufgabe zugrunde.

Demgemäß wurde die eingangs definierten Polyvinylhalogenidharzmassen gefunden.

Die Polyvinylchloridharzmassen enthalten als Komponente (A) 50 bis 99 Gew.-%, bevorzugt 60 bis 95 Gew.-% eines Homopolymeren des Vinylchlorids oder eines Copolymeren des Vinylchlorids mit mindestens 80 Gew.-% Vinylchlorideinheiten. Als Comonomere des Vinylchlorids kommen z.B. Chlor-haltige Monomere wie Vinylidenchlorid, aber auch Vinylester oder -ether, z.B. Vinylpropionat, Vinylacetat oder auch substituierte Maleinimide wie N-Phenyl-, N-Methyl-, N-Cyclohexylmaleinimid in Frage.

Bevorzugt handelt es sich bei den Komponenten (A) um Polyvinylchlorid.

Die Polyvinylhalogenidharzmassen enthalten weiterhin 1 bis 50 Gew.-%, bevorzugt 5 bis 40 Gew.-% des Pfropfcopolymerisats (B).

Das Pfropfcopolymerisat ist bevorzugt aus 2 bis 15 Gew.-% einer Pfropfgrundlage, 28 bis 70 Gew.-% einer 1. Pfropfhülle und 28 bis 70 Gew.-% einer 2. Pfropfhülle aufgebaut.

Das Pfropfcopolymerisat ist bevorzugt aus vinylaromatischen Monomeren, $C_1$-$C_{10}$-Alkylmethacrylaten, $C_1$-$C_{12}$-Alkylacrylaten und bi- oder polyfunktionellen Vernetzern aufgebaut.

Die Pfropfgrundlage ist bevorzugt aufgebaut aus

30 bis 69,95 Gew.-% eines vinylaromatischen Monomeren

30 bis 69,95 Gew.-% eines $C_1$-$C_{10}$-Alkylmethacrylats und

0,05 bis 5 Gew.-% eines bi- oder polyfunktionellen Vernetzers.

Die 1. Pfropfhülle ist bevorzugt aufgebaut aus

95 bis 99,95 Gew.-% eines vinylaromatischen Monomeren und

0,05 bis 5 Gew.-% eines bi- oder polyfunktionellen Vernetzers

2

Die 2. Pfropfhülle ist bevorzugt aufgebaut aus

95 bis 99,95 Gew.-% eines $C_1$-$C_{12}$-Alkylacrylats

0,05 bis 5 Gew.-% eines bi- oder polyfunktionellen Vernetzers

Als vinylaromatische Monomere seien z.B. $\alpha$-Methylstyrol und insbesondere Styrol genannt. Unter den $C_1$-$C_{10}$-Alkylmethacrylaten ist Methylmethacrylat von besonderer Bedeutung. Bevorzugte $C_1$-$C_{12}$-Alkylacrylate sind Ethyl-acrylat, n-Propylacrylat, n-Butylacrylat und 2-Ethylhexylacrylat.

Bei den bi- oder polyfunktionellen vernetzern handelt es sich z.B. um 1,4-Butandioldiacrylat, Trimethylolpropandiacrylat, (Meth)allylacrylat, Dihydrodicyclopentadienylacrylat, Adipinsäuredivinylester, Phthalsäurediallylester,Triallylcyanurat, Crotonsäurevinylester oder Butandioldivinylether.

Als weitere Comonomere seien z.B. (Meth-)acrylnitril, Vinylether, z.B. Vinylisobutylether, Vinylester, z.B. Vinylacetat und Vinylpropionat, und Diene, z.B. Butadien und Isopren, genannt.

Der Brechungsindex $n_D^{20}$ sowohl der Pfropfgrundlage als auch des gesamten Pfropfcopolymerisats B) weicht maximal um ± 0,02 insbesondere um ± 0,01 vom Brechungsindex der Komponenten (A) ab.

Die Gewichtsanteile der Monomeren der Pfropfgrundlage und der Monomeren des gesamten Pfropfmischpolymerisats werden so gewählt, daß die genannte Bedingung erfüllt ist.

Die Berechnung des Brechungsindexes eines Copolymerisats aus den Berechungsindices der Comonomeren und den Gewichtsanteilen der Comonomeren ist dem Fachmann bekannt.

Die Herstellung der Pfropfcopolymerisate kann in bekannter Weise durch Emulsionspolymerisation erfolgen.

Als Emulgatoren können z.B. Alkalisalze von längerkettigen Fettsäuren, Alkylsulfate, Alkylsulfonate, alkylierte Arylsulfonate oder alkylierte Biphenylethersulfonate Salze der Abietinsäure oder deren Derivate sowie Sulfobernsteinsäureester verwendet werden.

Geeignete Initiatoren sind z.B. übliche wasserlösliche thermisch zerfallende Initiatoren wie $Na_2S_2O_8$, Kaliumpersulfat $(NH_4)_2S_2O_8$ oder Redox-initiatoren wie z.B. $Na_2S_2O_8/Na_2S_2O_5$ oder t-Butylhydroperoxid/Natriumformaldehydsulfoxylat eingesetzt werden.

Die Emulsionspolymerisation wird vorzugsweise bei Temperaturen zwischen 30 und 95 °C durchgeführt.

Es werden zunächst die Monomeren der Pfropfgrundlage polymerisiert. Danach werden die Monomeren der einzelnen Pfropfhüllen zur wäßrigen Emulsion gegeben. Die Monomeren der Pfropfgrundlage und der einzelnen Pfropfhüllen werden zu mehr als 70 Gew.-%, bevorzugt zu mehr als 95 Gew.-%, besonders bevorzugt zu mehr als 99 Gew.-% auspölymerisiert, bevor mit der Zugabe der Monomeren einer weiteren Pfropfhülle begonnen wird.

Der Teilchendurchmeser der Pfropfcopolymerisate kann durch Naht der Polymerisationsbedingungen eingestellt werden, wie es z.B. in der DE-C 22 130 989 beschrieben ist. Die Teilchengröße hängt z.B. von der Rührergeschwindigkeit ab. Bevorzugt sind Teilchen mit einem mittleren Teilchendurchmesser $d_{50}$ - (Volumenmittel) zwischen ca. 50 und 200 nm, besonders bevorzugt zwischen 50 und 150 nm, und ganz besonders bevorzugt zwischen 50 und 100 nm.

Der Feststoffgehalt der Emulsionen beträgt bevorzugt 30 bis 60 Gew.-%.

Das Pfropfcopolymerisat kann aus der Emulsion in bekannter Weise z.B. durch Fällung oder Sprühtrocknung isoliert und mit den Komponenten (A) und gegebenenfalls weiteren Zusatzstoffen wie Stabilisatoren, Gleitmitteln, Füllstoffen, Farbstoffen, Pigmenten, oder weiteren Modifizierungsmitteln zur Verbesserung der Transparenz, Witterungsbeständigkeit, Wärmeformbeständigkeit,Schlagzähigkeit etc. nach bekannten Verfahren in Extrudern, Knetern oder Walzen gemischt werden. Die weitere Verarbeitung zu Formteilen erfolgt durch für Thermoplaste übliche Methoden (Extrudieren, Spritzgießen, Kalandrieren, Presse, Tiefziehen u.ä.).

Bevorzugt wird die erfindungsgemäße Polyvinylchloridharzmasse durch Suspensionspolymerisation der Monomeren der Komponenten (A) in Gegenwart des Pfropfcopolymerisats (B) hergestellt.

Die bei der Herstellung des Pfropfcopolymerisats (B) erhaltene Emulsion wird mit Wasser verdünnt und nach Zugabe der Monomeren der Komponenten (A) die Suspensionspolymerisation in bekannter Weise durchgeführt.

Als Schutzkolloide können z.B. Celluloseether wie Methyl-, Methylhydroxyethyl- und Methylhydroxypropylcellulose oder teilverseiften Polyvinylalkoholen allein oder in Kombination verwendet werden.

Als Initiatoren für die Suspensionspolymerisation kommen die üblichen monomerenlöslichen Peroxide in Betracht, z.B. t-Butylperneodecanoat, t-Butylperpivalat, Diisopropylperoxidicarbonat, Di-n-Butylperoxidicarbonat, Di-2-Ethylhexylperoxidicarbonat, Dicyclohexylperoxidicarbonat, Dilauroylperoxid, Dibenzoylperoxid.

Während der Suspensionspolymerisation kann der pH-Wert durch Zugabe von Puffersalzen z.B. Natriumphosphat, Natriumpolyphosphat, Natriumbicarbonat konstant gehalten werden.

3

EP 0 483 529 B1

Das erhaltene Suspensionspolymerisat kann mit den oben beschriebenen Zusatzstoffen gemischt und in bekannter Weise zu Formteilen verarbeitet werden.

Die erfindungsgemäßen Polyvinylhalogenidharzmassen sind witterungsstabil und zeichnen sich durch eine gute Schlagzähigkeit bei sehr guter Transparenz aus. Sie eignen sich daher in besonderem Maße zur Herstellung von Formmassen.

Beispiel

a) Herstellung eines Pfropfcopolymerisats
Ein Gemisch aus
3250 g destilliertem Wasser
66,5 g Methylmethacrylat
66,5 g Styrol
7 g Butandioldiacrylat
140 g 10 gew.-ige Lösung von Natriumlaurat
3,2 g Natriumpyrophosphat und
3,2 g Natriumpersulfat
wurde vorgelegt und unter Stickstoff auf 70°C erwärmt.
Dann wurde innerhalb von ca. 100 min ein Gemisch aus
1700 g Wasser
140 g 10 gew.-%ige Lösung von Natriumlaurat
1463 g Styrol
46 g Butandioldiacrylat
31 g Dihydrodicyclopentadienylacrylat
zudosiert und noch 15 min nachpolymerisiert.
Schließlich wurden
2,4 g Natriumpyrophosphat
2,4 g Natriumpersulfat
zugegeben, anschließend über ca. 90 min ein Gemisch aus 1325 g n-Butylacrylat
25 g Dihydrodicyclopentadienylacrylat zudosiert und noch 30 min nachpolymerisiert.
Es wurde eine Emulsionspolymerisat mit einer mittleren Teilchengröße von 87 nm erhalten.
b) Herstellung der Polyvinylchloridharzmasse durch Suspensionspolymerisation von Vinylchlorid in Gegenwart des Pfropfcopolymerisats.
In einem 50-Liter-Polymerisationskessel wurden
20 kg destilliertes Wasser
2578 g der Emulsion des Pfropfcopolymerisats (a)
17 g Hydroxypropylmethylcellulose
6,3 g teilverseiftes Polyvinylacetat
18 g Natriumtripolyphosphat
1,35 g Ethylhexylperoxydicarbonat
1,35 g t-Butylperneodecanoat
vorgelegt.
9 kg flüssiges Vinylchlorid wurden in den Kessel eingedrückt und der Kessel bei 300 Upm auf 60°C erwärmt. Nach einer Polymerisationszeit von 5 h wurde das nicht polymerisierte Vinylchlorid entspannt.
Das erhaltene Suspensionspolymerisat hatte eine mittlere Teilchengröße von 0,22 mm. Der Gewichtsanteil des Polyvinylchlorids in der Harzmasse betrug 88%.
c) Herstellung von Probekörper
Es wurden 0,2 kg einer Mischung von
100 Gew.-Tl - des oben hergestellten Suspensionspolymerisats
1 Gew.-Tl - eines Zinnstabilisators
0,8 Gew.-Tl. eines Gleitmittel auf Basis von Ölsäureglycerinestern und
0,2 Gew.-Tl. eines Gleitmittel auf Basis eines Polyesters aus Adipinsäure, Pentaerytrith, Ölsäure in einer Mischwalze bei 170°C hergestellt und dann zu Preßplatten verarbeitet. Die Prüfung der Kerbschlagzähigkeit erfolgte nach DIN 53 753 (Doppel-V-Kerbschlagzähigkeit) bei 23°C, 0°C und -20°C, Kerbradius 0,5 mm, sowie nach DIN 53 453 (Kerbschlagzähigkeit bei 23°C).
Außerdem wurden an einer 3 mm dicken Platte Durchlicht (D) und Streulicht (Str.) gemessen. Zur Bestimmung des Blauschimmers wurde die Transmission bei 400 nm bestimmt (T400).

4

Vergleichsbeispiel

In analoger Weise wie im Beispiel beschrieben, wurde ein Pfropfcopolymerisat hergestellt, wobei jedoch der Brechungsindex der Pfropfgrundlage nicht mit dem Brechungsindex des gesamten Pfropfcopolymerisats und dem Polyvinylchlorid übereinstimmt. Die Herstellung der Polyvinylchloridharzmasse und der Probekörper erfolgte ebenfalls in gleicher Weise.

Tabelle 1: Aufbau und Berechungsindices der Pfropfcopolymerisate

| | Pfropfgrundlage Gew.-% | $n_D^{20}$ | 1. Pfropfhülle Gew.-% | | 2. Pfropfhülle Gew.-% | | $n_D^{20}$ des Pfropfcopolymerisats |
|---|---|---|---|---|---|---|---|
| Beispiel | 4,6 | 1,54 | 50,8 | | 44,6 | | 1,54 |
| | 47,5 MMA | | 95 | St | 98 | BA | |
| | 47,5 St | | 3 | BDA | 2 | DDCP | |
| | 5,0 BDA | | 2 | DDCP | | | |
| Vergleichs-beispiel | 4,7 | 1,59 | 48,6 | | 46,7 | | 1,54 |
| | 97,0 St | | aus: 95 | St | .aus: 98 | BA | |
| | 3,0 BDA | | 3 | BDA | 2 | DDCP | |
| | | | 2 | DDCP | | | |

MMA  : Methylmethacrylat
St   : Styrol
BDA  : n-Butylacrylat
DDCP : Dihydrodicyclopentadienylat

Der Berechungsindex von Polyvinylchlorid, welches wie im Beispiel beschrieben durch Suspensionspolymerisation hergestellt wurde, beträgt 1,54.

EP 0 483 529 B1

Tabelle 2

| | optische Eigenschaften | | | Kerbschlagzähigkeit [kJ/m**2] | | | |
| | | | | av | | | ak |
| | D [%] | Str [%] | T400 [%] | 23°C | 0°C | -20°C | 23°C |
|---|---|---|---|---|---|---|---|
| Beispiel 1 | 81 | 12 | 42 | 99 | 38 | 15 | 52 |
| Vergleichs-beispiel | 75 | 17 | 27 | 96 | 45 | 17 | 59 |

Die Erfindungsgemäße Formmasse zeigt bei vergleichbaren mechanischen Eigenschaften deutlich verbesserte optische Eigenschaften.

EP 0 483 529 B1

EP 0 483 529 B1

**Patentansprüche**
**Patentansprüche für folgende Vertragsstaaten : BE, DE, FR, GB, IT, NL, SE**

1. Schlagzähe Polyvinylchloridharzmassen` enthaltend
    (A) 50 bis 99 Gew.-% eines Homopolymeren des Vinylchlorids oder eines Copolymeren des Vinylchlorids mit mindestens 80 Gew.-% Vinylchlorideinheiten und
    (B) 1 bis 50 Gew.-% eines Pfropfcopolymerisats aus
    1 bis 25 Gew.-% einer Pfropfgrundlage aus
    20 bis 79,99 Gew.-% eines vinylaromatischen Monomeren
    20 bis 79,99 Gew.-% eines $C_1$-$C_{10}$-Alkylmethacrylats
    0,01 bis 10 Gew.-% ein bi- oder polyfunktionellen Vernetzers
    0 bis 10 Gew.-% eines $C_1$-$C_{12}$-Alkylacrylats
    0 bis 20 Gew.-% weiterer Comonomere,
    19 bis 80 Gew.-% einer 1. Pfropfhülle aus
    50 bis 99,99 Gew.-% eines vinylaromatischen Monomeren
    0,01 bis 10 Gew.-% eines bi- oder polyfunktionellen Vernetzers
    0 bis 19 Gew.-% eines $C_1$-$C_{10}$-Alkylmethacrylats
    0 bis 40 Gew.-% eines weiteren Comonomeren und
    19 bis 80 Gew.-% einer 2. Pfropfhülle aus
    50 bis 99,99 Gew.-% eines $C_1$-$C_{12}$-Alkylacrylats
    0,01 bis 10 Gew.-% eines bi- oder polyfunktionellen Vernetzers
    0 bis 20 Gew.-% eines vinylaromatischen Monomeren
    0 bis 30 Gew.-% eines $C_1$-$C_{10}$-Alkylmethacrylats
    0 bis 40 Gew.-% weiterer Comonomere
    mit der Maßgabe, daß man Art und Menge der Monomeren der Pfropfgrundlage so wählt, daß der Brechungsindex der Pfropfgrundlage maximal um ± 0,02 vom Brechungsindex des gesamten Pfropfcopolymerisats und der Komponente (A) abweicht.

2. Formteile aus Polyvinylchloridharzmassen gemäß Anspruch 1.

**Patentansprüche für folgenden Vertragsstaat : ES**

1. Verfahren zur Herstellung von schlagzähen Polyvinylchloridharzmassen, enthaltend
    (A) 50 bis 99 Gew.-% eines Homopolymeren des Vinylchlorids oder eines Copolymeren des Vinylchlorids mit mindestens 80 Gew.-% Vinylchlorideinheiten und
    (B) 1 bis 50 Gew.-% eines Pfropfcopolymerisats, dadurch gekennzeichnet, daß man das Pfropfcopolymerisat herstellt durch Copolymerisation von
    1 bis 25 Gew.-% einer Pfropfgrundlage aus
    20 bis 79,99 Gew.-% eines vinylaromatischen Monomeren
    20 bis 79,99 Gew.-% eines $C_1$-$C_{10}$-Alkylmethacrylats
    0,01 bis 10 Gew.-% ein bi- oder polyfunktionellen Vernetzers
    0 bis 10 Gew.-% eines $C_1$-$C_{12}$-Alkylacrylats
    0 bis 20 Gew.-% weiterer Comonomere,
    19 bis 80 Gew.-% einer 1. Pfropfhülle aus
    50 bis 99,99 Gew.-% eines vinylaromatischen Monomeren
    0,01 bis 10 Gew.-% eines bi- oder polyfunktionellen Vernetzers
    0 bis 19 Gew.-% eines $C_1$-$C_{10}$-Alkylmethacrylats
    0 bis 40 Gew.-% eines weiteren Comonomeren und
    19 bis 80 Gew.-% einer 2. Pfropfhülle aus
    50 bis 99,99 Gew.-% eines $C_1$-$C_{12}$-Alkylacrylats
    0,01 bis 10 Gew.-% eines bi- oder polyfunktionellen Vernetzers
    0 bis 20 Gew.-% eines vinylaromatischen Monomeren
    0 bis 30 Gew.-% eines $C_1$-$C_{10}$-Alkylmethacrylats
    0 bis 40 Gew.-% weiterer Comonomere
    mit der Maßgabe, daß man Art und Menge der Monomeren der Pfropfgrundlage so wählt, daß der Brechungsindex der Pfropfgrundlage maximal um ± 0,02 vom Brechungsindex des gesamten Pfropfcopolymerisats und der Komponente (A) abweicht.

8

**2.** Formteile aus Polyvinylchloridharzmassen gemäß Anspruch 1.


**Claims**
**Claims for the following Contracting States : BE, DE, FR, GB, IT, NL, SE**

**1.** An impact-resistant polyvinyl chloride resin material containing
(A) from 50 to 99% by weight of a homopolymer of vinyl chloride or of a copolymer of vinyl chloride containing not less than 80% by weight of vinyl chloride units and
(B) from 1 to 50% by weight of a graft copolymer of
from 1 to 25% by weight of a grafting base of
from 20 to 79.99% by weight of a vinylaromatic monomer,
from 20 to 79.99% by weight of a $C_1$-$C_{10}$-alkyl methacrylate,
from 0.01 to 10% by weight of a bifunctional or polyfunctional crosslinking agent,
from 0 to 10% by weight of a $C_1$-$C_{12}$-alkyl acrylate and
from 0 to 20% by weight of further comonomers,
from 19 to 80% by weight of a first graft shell of
from 50 to 99.99% by weight of a vinylaromatic monomer,
from 0.01 to 10% by weight of a bifunctional or polyfunctional crosslinking agent,
from 0 to 19% by weight of a $C_1$-$C_{10}$-alkyl methacrylate and
from 0 to 40% by weight of a further comonomer and
from 19 to 80% by weight of a second graft shell of
from 50 to 99.99% by weight of a $C_1$-$C_{12}$-alkyl acrylate,
from 0.01 to 10% by weight of a bifunctional or polyfunctional crosslinking agent,
from 0 to 20% by weight of a vinylaromatic monomer,
from 0 to 30% by weight of a $C_1$-$C_{10}$-alkyl methacrylate and
from 0 to 40% by weight of further monomers,
with the proviso that the type and amount of monomers of the grafting base are chosen so that the refractive index of the grafting base differs from the refractive index of the total graft copolymer and of component (A) by not more than ± 0.02.

**2.** A molding of a polyvinyl chloride resin material as claimed in claim 1.


**Claims for the following Contracting State : ES**

**1.** A process for the preparation of an impact-resistant polyvinyl chloride resin material containing
(A) from 50 to 99% by weight of a homopolymer of vinyl chloride or of a copolymer of vinyl chloride containing not less than 80% by weight of vinyl chloride units and
(B) from 1 to 50% by weight of a graft copolymer, wherein the graft copolymer is prepared by copolymerization of
from 1 to 25% by weight of a grafting base of
from 20 to 79.99% by weight of a vinylaromatic monomer,
from 20 to 79.99% by weight of a $C_1$-$C_{10}$-alkyl methacrylate,
from 0.01 to 10% by weight of a bifunctional or polyfunctional crosslinking agent,
from 0 to 10% by weight of a $C_1$-$C_{12}$-alkyl acrylate and
from 0 to 20% by weight of further comonomers,
from 19 to 80% by weight of a first graft shell of
from 50 to 99.99% by weight of a vinylaromatic monomer,
from 0.01 to 10% by weight of a bifunctional or polyfunctional crosslinking agent,
from 0 to 19% by weight of a $C_1$-$C_{10}$-alkyl methacrylate and
from 0 to 40% by weight of a further comonomer and
from 19 to 80% by weight of a second graft shell of
from 50 to 99.99% by weight of a $C_1$-$C_{12}$-alkyl acrylate,
from 0.01 to 10% by weight of a bifunctional or polyfunctional crosslinking agent,
from 0 to 20% by weight of a vinylaromatic monomer,
from 0 to 30% by weight of a $C_1$-$C_{10}$-alkyl methacrylate and
from 0 to 40% by weight of further monomers,
with the proviso that the type and amount of monomers of the grafting base are chosen so that the refractive index of the grafting base differs from the refractive index of the total graft copolymer and of component (A) by not more than ± 0.02.

2. A molding of a polyvinyl chloride resin material as claimed in claim 1.

**Revendications**
**Revendications pour les Etats contractants suivants : BE, DE, FR, GB, IT, NL, SE**

1. Mélanges à mouler à résistance élevée aux chocs de résine de poly(chlorure de vinyle), contenant
    (A) 50 à 99 % en poids d'un homopolymère de chlorure de vinyle ou d'un copolymère de chlorure de vinyle avec au minimum 80 % en poids d'unités chlorure de vinyle et
    (B) 1 à 50 % en poids d'un copolymère greffé composé de
    1 à 25 % en poids d'une base de greffage contenant
    20 à 79,99 % en poids d'un monomère vinylaromatique
    20 à 79,99 % en poids d'un méthacrylate d'alkyle en $C_1$-$C_{10}$
    0,01 à 10 % en poids d'un agent de réticulation bi-ou polyfonctionnel
    0 à 10 % en poids d'un acrylate d'alkyle en $C_1$-$C_{12}$
    0 à 20 % en poids d'autres comonomères,
    19 à 80 % en poids d'une première enveloppe greffée contenant
    50 à 99,99 % en poids d'un monomère vinylaromatique
    0,01 à 10 % en poids d'un agent de réticulation bi-ou polyfonctionnel
    0 à 19 % en poids d'un méthacrylate d'alkyle en $C_1$-$C_{10}$
    0 à 40 % en poids d'un autre comonomère, et
    19 à 80 % en poids d'une seconde enveloppe greffée contenant
    50 à 99,99 % en poids d'un acrylate d'alkyle en $C_1$-$C_{12}$
    0,01 à 10 % en poids d'un agent de réticulation bi-ou polyfonctionnel
    0 à 20 % en poids d'un monomère vinylaromatique
    0 à 30 % en poids d'un méthacrylate d'alkyle en $C_1$-$C_{10}$
    0 à 40 % en poids d'autres comonomères,
    à la condition que le type et la quantité des monomères de la base de greffage soient choisis de sorte que l'indice de réfraction de la base de greffage s'écarte au maximum de ±0,02 de l'indice de réfraction du copolymère greffé total et du composant (A).

2. Pièces moulées dans des mélanges à mouler de résine de poly(chlorure de vinyle) préparés selon la revendication 1.

**Revendications pour l'Etat contractant suivant : ES**

1. Procédé de préparation de mélanges à mouler à résistance élevée aux chocs de résine de poly-(chlorure de vinyle), contenant
    (A) 50 à 99 % en poids d'un homopolymère de chlorure de vinyle ou d'un copolymère de chlorure de vinyle avec au minimum 80 % en poids d'unités chlorure de vinyle et
    (B) 1 à 50 % en poids d'un copolymère greffé, caractérisé en ce que le copolymère greffé est préparé par copolymérisation de
    1 à 25 % en poids d'une base de greffage contenant
    20 à 79,99 % en poids d'un monomère vinylaromatique
    20 à 79,99 % en poids d'un méthacrylate d'alkyle en $C_1$-$C_{10}$
    0,01 à 10 % en poids d'un agent de réticulation bi-ou polyfonctionnel
    0 à 10 % en poids d'un acrylate d'alkyle en $C_1$-$C_{12}$
    0 à 20 % en poids d'autres comonomères,
    19 à 80 % en poids d'une première enveloppe greffée contenant
    50 à 99,99 % en poids d'un monomère vinylaromatique
    0,01 à 10 % en poids d'un agent de réticulation bi-ou polyfonctionnel
    0 à 19 % en poids d'un méthacrylate d'alkyle en $C_1$-$C_{10}$
    0 à 40 % en poids d'un autre comonomère, et
    19 à 80 % en poids d'une seconde enveloppe greffée contenant
    50 à 99,99 % en poids d'un acrylate d'alkyle en $C_1$-$C_{12}$
    0,01 à 10 % en poids d'un agent de réticulation bi-ou polyfonctionnel
    0 à 20 % en poids d'un monomère vinylaromatique

0 à 30 % en poids d'un méthacrylate d'alkyle en $C_1$-$C_{10}$

0 à 40 % en poids d'autres comonomères,

à la condition que le type et la quantité des monomères de la base de greffage soient choisis de sorte que l'indice de réfraction de la base de greffage s'écarte au maximum de ±0,02 de l'indice de réfraction du copolymère greffé total et du composant (A).

2. Pièces moulées dans des mélanges de résine à mouler de poly(chlorure de vinyle) préparés selon la revendication 1.